# EUROPÄISCHE PATENTSCHRIFT

(11) **EP 1 143 213 B1**
(45) Veröffentlichungstag und Bekanntmachung des Hinweises auf die Patenterteilung: **04.05.2005**
(21) Anmeldenummer: 01101894.2
(22) Anmeldetag: 27.01.2001
(51) Int. Cl.: F25B 45/00, B60H 1/00

(54) **Befüllvorrichtung für Kraftfahrzeugklimaanlagen**
Filling apparatus for motor vehicle air-conditioning systems
Dispositif de remplissage pour un système de climatisation de véhicules à moteur

(30) Priorität: 30.03.2000 DE 10015976
(43) Veröffentlichungstag der Anmeldung: 10.10.2001
(73) Patentinhaber: Behr GmbH & Co. KG, 70469 Stuttgart (DE)
(72) Erfinder: Bimbös, Herbert, 70794 Filderstadt (DE); Schmidt, Wolfgang, 73307 Plochingen (DE); Raiser, Harald, Dipl.-Ing., 72336 Balingen (DE); Sickelmann, Michael, 70435 Stuttgart (DE)

(56) Entgegenhaltungen:
- WO-A-81/00756
- DE-A- 3 903 045
- US-A- 4 261 178
- US-A- 4 470 265
- US-A- 4 624 112
- US-A- 4 688 388
- US-A- 4 884 410
- US-A- 5 375 426
- US-A- 5 406 806
- US-A- 5 999 700

## Beschreibung

Die Erfindung betrifft eine Befüllvorrichtung für Kraftfahrzeugklimaanlagen, die zur Wartung von Klimaanlagen benötigt werden, um altes, verbrauchtes Kältemittel gegen neues auszutauschen.

Aus der EP 0 315 296 B1 ist eine Kältemittelwiedergewinnungsanlage bekannt, mit der Kältemittel einer Klimaanlage entnommen, gereinigt und der Klimaanlage wieder zugeführt werden kann. Diese bekannte Kältemittelwiedergewinnungsanlage ist für Klimaanlagen, die mit den Kältemitteln R12 oder R134a betrieben werden, geeignet. Diese Kältemittel sind aufgrund ihres Gehalts an Kohlenwasserstoffen äußerst umweltschädlich und dürfen nicht in die Umwelt entlassen werden, so daß eine solche Kältemittelwiedergewinnungsanlage mit einer Vielzahl von Komponenten wie Verdampfer, Kondensator, Kompressor und verschiedenen Ventilen und einem komplizierten Aufbau notwendig ist.

US-A-4 624 112 offenbart eine Befüllvorrichtung mit einem Thermostat für das Kältemittelreservoir um die Temperatur im Reservoir zu regeln.

Für Klimaanlagen, die ungefährliche und natürliche Kältemittel, beispielsweise CO₂, enthalten, ist eine derartige Kältemittelwiedergewinnungsanlage nicht notwendig bzw. sinnvoll.

Es ist daher Aufgabe der Erfindung eine Befüllvorrichtung für Kraftfahrzeugklimaanlagen mit ungefährlichen Kältemitteln, insbesondere CO₂, bereitzustellen, die einfach aufgebaut sein soll und entsprechend kostengünstig ist und einen hohen Sicherheitsstandard darstellt.

Diese Aufgabe wird gelöst durch eine Befüllvorrichtung mit den Merkmalen des Anspruchs 1.

Erfindungsgemäß weist die Befüllvorrichtung lediglich einen Anschluß zum Anschließen der Vorrichtung an die Klimaanlage auf, wobei von dem Anschluß im wesentlichen drei Leitungen abzweigen. Eine erste ist als Ablaßleitung ausgebildet und enthält ein Ablaßventil, mit dem das Kältemittel, insbesondere CO₂ definiert abgelassen werden kann. Ein definiertes, langsames Ablassen des Kältemittels ist bei CO₂-Klimaanlagen besonders wichtig, da bei einem unkontrollierten Ablassen des CO₂, die in der Klimaanlage verwendeten Polymere, beispielsweise Dichtungen, Schaden nehmen könnten. Eine zweite Leitung ist als Abpumpleitung ausgebildet, die eine Pumpe aufweist, mit der Feuchtigkeit, Schmutz und Restfüllmengen des CO₂ aus der Klimaanlage vollständig abgepumpt werden können, so daß die Klimaanlage dann über eine Zuführleitung mit frischem CO₂ befüllt werden kann. Das CO₂ ist in einem handelsüblichen Kältemittelvorratsbehälter vorgesehen.

Die erfindungsgemäße Befüllvorrichtung bietet einen hohen Sicherheitsstandard und ist einfach und entsprechend kostengünstig aufgebaut und somit auch von fachunkundigem Personal einfach zu bedienen.

In einer Ausgestaltung der Erfindung ist in der Ablaßleitung ein Ölabscheider vorgesehen, so daß beim Ablassen des von dem CO₂ mittransportierten Kältemaschinenöls nicht an die Umwelt abgegeben wird, sondern gesammelt und entsorgt werden kann.

Um einen definierten Ablaß des CO₂ sicherzustellen, ist in der Ablaßleitung ein Druckminderer vorgesehen, so daß das CO₂ in einer vorgegebenen Massen- bzw. Volumenstromrate abgelassen werden kann.

Um den Befülldruck mit frischem CO₂ sicher einstellen zu können, ist in der Zuführleitung ein Druckmesser vorgesehen.

Um die erforderlichen Befülldrucke erreichen zu können, weist der Kältemittelvorratsbehälter Heizmittel auf, mit dem das im Vorratsbehälter vorhandene CO₂ aufgeheizt werden kann, so daß die Klimaanlage mit dem entsprechenden Druck, beispielsweise 70 bar, befüllt werden kann. Damit die Heizleistung nicht zu hoch wird, und damit nicht ein zu hoher Druck entsteht, der zu Beschädigungen der Klimaanlage führen könnte, ist eine Sicherheitsschaltung zur Begrenzung der Heizleistung vorgesehen.

In einer Kraftfahrzeugklimaanlage mit CO₂ als Kältemittel muß eine definierte Menge CO₂ eingefüllt werden, wobei die Toleranzen ±10 Gramm nicht überschreiten sollten. Um diese Toleranzgrenzen einhalten zu können, ist eine Waage vorgesehen, mit der die dem Vorratsbehälter entnommene Kältemittelmenge exakt bestimmt werden kann.

In weiterer Ausgestaltung der Erfindung ist die Pumpe zum vollständigen Entleeren der Klimaanlage als Vakuumpumpe ausgebildet, mit der das gasförmige CO₂ abgepumpt werden und ein definiertes Vakuum in den Leitungen und Komponenten des Kältekreislaufs erzeugt werden kann, so daß auch eine Dichtprüfung des Kältekreises vorgenommen werden kann. Bei Erzeugung eines Vakuums wird auch das im Kältmaschinenöl gelöste CO₂ aus dem Öl ausgetrieben und abgepumpt. Das erzeugte Vakuum dient zusätlich zur Entfeuchtung des Kältekreislaufs.

Zur Vereinfachung der Bedienbarkeit ist ein Steuergerät zur Steuerung sämtlicher Komponenten der Befüllvorrichtung, wie Ventile, Heizungen, Waage, etc. vorgesehen, mit dem zentral die einzelnen Komponenten ansteuerbar sind. Dadurch können alle wesentlichen Vorgänge, wie das definierte Ablassen des Kältemittels, das Erzeugen des Vakuums im Kältekreislauf, die Kontrolle und das Einstellen des Befülldruckes und das definierte Befüllen der Klimaanlage mit einer definierten Menge Kältemittel mit einem definierten Massenstrom, automatisiert werden.

Damit die einzelnen Leitungen den eventuell auftretenden hohen Drücken standhalten können, sollten diese vorzugsweise aus Stahl oder Aluminium bestehen.

Um die Befüllvorrichtung variabel einsetzen zu können, ist die gesamte Befüllvorrichtung in einem Gehäuse untergebracht und transportabel ausgebildet. In bekannter Weise kann dies beispielsweise durch Rollen an dem Gehäuse realisiert sein.

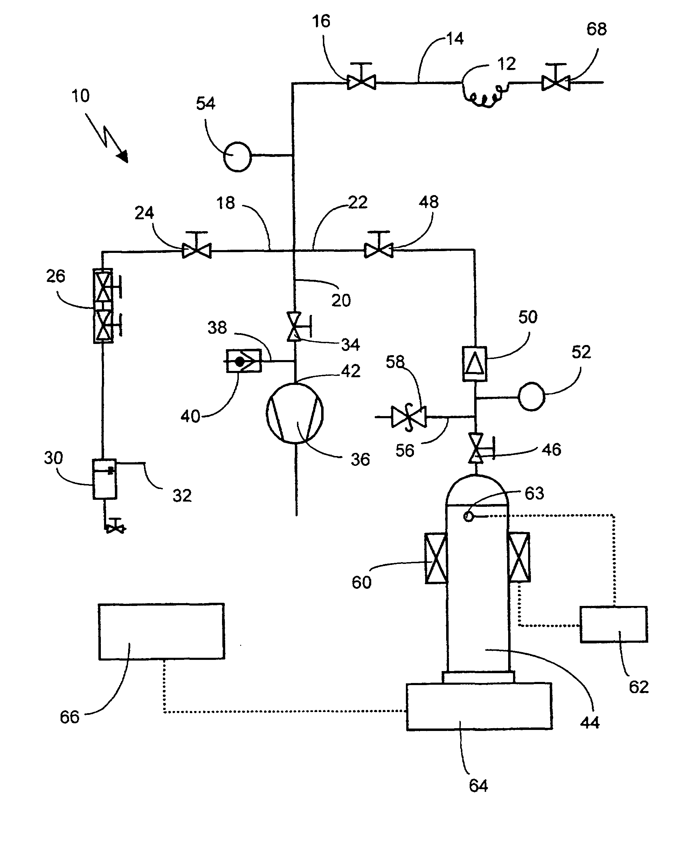

Im folgenden wird die Erfindung anhand eines Ausführungsbeispiels unter Bezugnahme auf die Zeichnung im einzelnen erläutert. Die einzige Figur der Zeichnung zeigt ein schematisches Blockschaltbild der erfindungsgemäßen Befüllvorrichtung.

Eine erfindungsgemäße Befüllvorrichtung 10 weist einen Anschluß 12 zum Anschließen der Befüllvorrichtung 10 an eine Kraftfahrzeugklimaanlage auf. An den Anschluß 12 schließt sich eine Leitung 14 an, die über ein erstes Absperrventil 16 absperrbar ist und die sich in eine Ablaßleitung 18, eine Abpumpleitung 20 und eine Kältemittelzuführleitung 22 teilt.

Die Ablaßleitung 18 weist ein zweites Absperrventil 24, eine Vorrichtung zur Reduzierung des Druckes 26 und einen Ölabscheider 30 in Reihenschaltung auf. Am Ende der Ablaßleitung 18 ist ein Kältemittelaustritt 32 angeordnet, über den abgelassenes Kältemittel in die Umgebung abgegeben werden kann.

Die Abpumpleitung 20 weist ein drittes Absperrventil 34 und eine nachgeschaltete Vakuumpumpe 36 auf. Zwischen dem Absperrventil 34 und der Vakuumpumpe 36 zweigt eine Sicherheitsleitung 38 ab, in der ein Rückschlagventil angeordnet ist, so daß wenn große Mengen Kältemittel am Eingang 40 der Vakuumpumpe 36 anfallen, diese nicht vollständig über die Vakuumpumpe 36 abgeführt werden müssen, sondern über die Sicherheitsleitung 38 und das Rückschlagventil 40 an die Umgebung abgegeben werden können.

Die Kältemittelzuführleitung 22 verbindet die Leitung 14 mit einem Kältemittelvorratsbehälter 44, in dem das in die Klimaanlage zu füllende Kältemittel, insbesondere CO₂, vorgesehen ist. Als Vorratsbehälter 44 werden aus Sicherheitsgründen handelsübliche Flüssiggasflaschen mit Steigrohr eingesetzt. Der Vorratsbehälter 44 ist über ein Gasflaschenventil 46 absperrbar. Die Zuführleitung 22 ist über ein viertes Absperrventil 48 ebenfalls absperrbar. Beim Öffnen der Ventile 46, 48 und 16 zum Befüllen der Klimaanlage verhindert eine Drosselvorrichtung 50 ein zu schnelles Überströmen von Kältemittel aus dem Vorratsbehälter 44 in das Leitungssystem der Befüllvorrichtung 10. Der Befülldruck der Klimaanlage stellt sich in Abhängigkeit der Temperatur und der im Vorratsbehälter 44 vorhandenen Kältemittelmenge ein und kann an in der Leitung 14 und Zuführleitung 22 vorgesehenen Druckmeßgeräten 52 und 54 abgelesen werden. Um Kältemittel aus dem Vorratsbehälter 44 überströmen zu lassen, muß der Betriebsdruck im Vorratsbehälter 44 stets größer sein als der aktuell im Kältekreislauf anliegende Druck. Um die dazu notwendigen Betriebsdrucke im Vorratsbehälter bei Bedarf zu erzeugen, weist der Kältemittelvorratsbehälter 44 Heizmittel 60 auf, mit der der Kältemittelvorratsbehälter und somit das darin befindliche Kältemittel geheizt werden können.

Über eine elektronische Regelschaltung kann die Heizleistung geregelt werden, so daß der entsprechende Betriebsdruck in dem Vorratsbehälter erreicht wird und bei zu hohen Drücken eine Abregelung der Heizung 60 erfolgt. Desweiteren ist eine mechanische Sicherheitsabschaltung 62 vorgesehen, die einen an dem Vorratsbehälter 44 angeordneten Temperaturfühler 63 aufweist, der über eine Kapillare mit der Sicherheitsabschaltung verbunden ist. Bei Erreichen einer Sicherheitsgrenztemperatur wird die elektrische Versorgung für die Heizung 60 unterbrochen.

Von der Zuführleitung 22 zweigt eine zweite Sicherheitsleitung 56 ab, die über ein Sicherheitsventil 58 geöffnet werden kann. Das Sicherheitsventil 58 kann im Notfall auch von Hand geöffnet werden, wenn aus unbekannten Gründen der Druck in der Zuführleitung 22 zu hoch ist.

Der Kältemittelvorratsbehälter 44 ist auf einer Waage 64 gelagert, so daß über eine Anzeige- und Steuerungseinheit 66 der Waage 64 eine exakt bestimmbare Kältemittelmenge dem Kältemittelvorratsbehälter 44 entnommen werden kann.

Ein Befüllen der Kraftfahrzeugklimaanlage geschieht nach folgenden Verfahrensschritten:

Zunächst wird die Befüllvorrichtung 10 mit ihrem Anschluß 12 an ein am Fahrzeug angeordnetes Befüllventil 68 der Kraftfahrzeugklimaanlage angeschlossen. Das dritte Absperrventil 34 wird geschlossen und das Befüllventil 68 sowie das erste, zweite und vierte Absperrventil 16, 24 und 48 geöffnet und die Vorrichtung zur Reduzierung des Druckes 26 so eingestellt, daß sich ein gewünschter Durchfluß einstellt. Altes Kältemittel kann dann über den Ölabscheider 30 in die Atmosphäre über den Austritt 32 definiert langsam abgegeben werden. Wenn der Druck in der Klimaanlage und den Leitungen der Befüllvorrichtung 10 auf Umgebungsdruck gesunken ist und somit der Durchfluß durch die Ablaßleitung 18 auf Null gesunken ist, wird das zweite Absperrventil 24 geschlossen und die Vakuumpumpe 36 gestartet und das dritte Absperrventil 34 geöffnet, so daß jetzt über die Abpumpleitung 20 das restliche Kältemittel sowie sonstige Feuchtigkeit und Schmutz aus der Klimaanlage abgepumpt wird.

Nachdem das restliche Kältemittel aus der Klimaanlage abgepumpt wurde, wird das dritte Absperrventil 34 und das Befüllventil 68 geschlossen und das Gasflaschenventil 46 geöffnet. Dann stellt sich ein bestimmter Befülldruck in Abhängigkeit von der Temperatur und Inhalt des Vorratsbehälters 44 ein. Zum Erreichen des Befülldruckes kann eventuell der Kältemittelvorratsbehälter 44 über die Heizmittel 60 beheizt werden. Zuvor ist die Anzeige 66 der Waage 64 abgelesen worden, so daß eine Bestimmung des dem Kältemittelvorratsbehälter 44 entnommenen Kältemittels möglich ist. Kältemittel strömt dann von dem Kältemittelvorratsbehälter 44 in das Leitungssystem der Befüllvorrichtung 10. Durch kontrolliertes Öffnen des Befüllventils 68 am Fahrzeug wird der Kältekreis der Klimaanlage befüllt.

Nach Erreichen der vorgeschriebenen Kältemittelmenge wird das Befüllventil 68 geschlossen. Die eingefüllte Kältemittelmenge entspricht der Gewichtsabnahme des Vorratsbehälters 44. Durch das Schließen des Gasflaschenventils 46 und dem Öffnen des zweiten Absperrventils 24 wird das Kältemittel im Leitungssystem der Befüllvorrichtung 10 in die Umgebung abgelassen. Anschließend kann die Befüllvorrichtung 10 vom Kältekreislauf getrennt werden.

Der gesamte Entleer- und Befüllvorgang kann durch ein nicht näher dargestelltes Steuergerät automatisch ablaufen, wie bereits eingangs beschrieben. Dazu ist vorteilhafterweise die einzufüllende Kältemittelmenge in das Steuergerät eingebbar.

## Patentansprüche

1. Befüllvorrichtung für Kraftfahrzeugklimaanlagen
- mit einem Anschluß (12) zum Anschließen der Vorrichtung (10) an die Klimaanlage,
- mit einer ein Ablaßventil (24) enthaltenden Ablaßleitung (18) zum definierten Ablassen des Kältemittels der Klimaanlage,
- mit einer eine Pumpe (36) aufweisenden Abpumpleitung (20), die mit dem Anschluß (12) verbunden ist, zum vollständigen Abpumpen von Kältemittelresten und
- mit einer mit dem Anschluß (12) verbundenen Kältemittelzuführleitung (22) zum Befüllen der Klimaanlage mit Kältemittel aus einem Kältemittelvorratsbehälter (44).
- mit einem Heizmittel (60) zum Heizen des Kältemittelvorratsbehälters (44),
- mit einer mechanischen Sicherheitsabschaltung (62), so daß bei zu hoher Temperatur des Vorratsbehälters (44) die Heizleistung reduziert wird, **gekennzeichnet durch**
- eine elektronische Regelschaltung zur Regelung der Heizleistung der Heizung des Kältemittelvorratsbehälters.

2. Befüllvorrichtung nach Anspruch 1, **dadurch gekennzeichnet, daß** in der Ablaßleitung (18) ein Ölabscheider (30) vorgesehen ist.

3. Befüllvorrichtung nach Anspruch 1 oder 2, **dadurch gekennzeichnet, daß** in der Ablaßleitung (18) ein Druckminderer (26) vorgesehen ist.

4. Befüllvorrichtung nach einem der vorhergehenden Ansprüche, **dadurch gekennzeichnet, daß** in der Zuführleitung (22) ein Druckmeßgerät (52) vorgesehen ist.

5. Befüllvorrichtung nach einem der vorhergehenden Ansprüche, **dadurch gekennzeichnet, daß** eine Waage (64) vorgesehen ist, zur Bestimmung der dem Vorratsbehälter (44) entnommenen Kältemittelmenge.

6. Befüllvorrichtung nach einem der vorhergehenden Ansprüche, **dadurch gekennzeichnet, daß** die Pumpe (36) eine Vakuumpumpe (36) ist.

7. Befüllvorrichtung nach einem der vorhergehenden Ansprüche, **gekennzeichnet durch** ein Steuergerät zur Steuerung sämtlicher Ventile, Heizmittel und Waage der Befüllvorrichtung.

8. Befüllvorrichtung nach einem der vorhergehenden Ansprüche, **dadurch gekennzeichnet, daß** die Leitungen (14, 18, 20, 22) aus Stahl oder Aluminium bestehen.

9. Befüllvorrichtung nach einem der vorhergehenden Ansprüche, **dadurch gekennzeichnet, daß** die einzelnen Komponenten der Befüllvorrichtung in einem gemeinsamen Gehäuse vorgesehen sind und dieses gemeinsame Gehäuse transportabel ausgebildet ist.

## Claims

1. Charging device for vehicle air conditioning systems,
- with a port (12) for connecting the device (10) to the air conditioning system,
- with a drain line (18) incorporating a drain valve (24) for the defined discharge of the refrigerant of the air conditioning system,
- with a pumping-out line (20) incorporating a pump (36) and connected to the port (12) for the complete removal of residual refrigerant, and
- with a refrigerant feed line (22) connected to the port (12) for charging the air conditioning system with refrigerant from a refrigerant storage tank,
- with a mechanical safety cut-out (62) for reducing the heating power if the temperature of the storage tank (44) becomes too high,
- **characterised by** an electronic control circuit for controlling the heating power of the heater of the refrigerant storage tank.

2. Charging device according to claim 1, **characterised in that** an oil separator (30) is provided in the drain line (18).

3. Charging device according to claim 1 or 2, **characterised in that** a pressure reducer (26) is provided in the drain line (18).

4. Charging device according to any of the preceding claims, **characterised in that** a pressure gauge (52) is provided in the feed line (22).

5. Charging device according to any of the preceding claims, **characterised in that** scales (64) are provided for determining the amount of refrigerant taken from the storage tank (44).

6. Charging device according to any of the preceding claims, **characterised in that** the pump (36) is a vacuum pump (36).

7. Charging device according to any of the preceding claims, **characterised by** a control unit for the control of all valves, the heating means and the scales of the charging device.

8. Charging device according to any of the preceding claims, **characterised in that** the lines (14, 18, 20, 22) are made of steel or aluminium.

9. Charging device according to any of the preceding claims, **characterised in that** the individual components of the charging device are located in a common housing and **in that** said common housing is designed to be mobile.

## Revendications

1. Dispositif de remplissage pour des climatisations automobiles comprenant
- un branchement (12) pour le raccordement du dispositif (10) à la climatisation,
- une conduite de sortie (18) contenant une soupape de sortie pour l'évacuation définie du réfrigérant de la climatisation,
- une conduite d'évacuation par pompage (20) présentant une pompe (36), qui est reliée au branchement (12), pour l'évacuation complète par pompage de restes de réfrigérant et
- une conduite d'arrivée de réfrigérant (22) reliée au branchement (12) pour le remplissage de la climatisation avec du réfrigérant provenant d'un récipient de stockage de réfrigérant (44),
- un moyen de chauffage (60) pour le chauffage du récipient de stockage de réfrigérant (44),
- une déconnexion de sécurité (62) mécanique, de sorte que la puissance de chauffage est réduite dans le cas d'une température trop élevée du récipient de stockage (44), **caractérisé par** un circuit de réglage électronique pour le réglage de la puissance du chauffage du récipient de stockage de réfrigérant.

2. Dispositif de remplissage selon la revendication 1, **caractérisé en ce qu'**un séparateur d'huile (30) est prévu dans la conduite de sortie (18).

3. Dispositif de remplissage selon la revendication 1 ou 2 **caractérisé en ce qu'**un réducteur de pression (26) est prévu dans la conduite de sortie (18).

4. Dispositif de remplissage selon l'une quelconque des revendications précédentes, **caractérisé en ce qu'**un appareil de mesure de pression (52) est prévu dans la conduite d'arrivée (22).

5. Dispositif de remplissage selon l'une quelconque des revendications précédentes, **caractérisé en ce qu'**il est prévu une balance (64) pour la détermination de la quantité de réfrigérant prélevée sur le récipient de stockage (44).

6. Dispositif de remplissage selon l'une quelconque des revendications précédentes, **caractérisé en ce que** la pompe (36) est une pompe à vide (36).

7. Dispositif de remplissage selon l'une quelconque des revendications précédentes, **caractérisé par** un appareil de commande pour la commande de toutes les soupapes, du moyen de chauffage et de la balance du dispositif de remplissage.

8. Dispositif de remplissage selon l'une quelconque des revendications précédentes, **caractérisé en ce que** les conduites (14, 18, 20, 22) sont en acier ou en aluminium.

9. Dispositif de remplissage selon l'une quelconque des revendications précédentes, **caractérisé en ce que** les composants individuels du dispositif de remplissage sont prévus dans un boîtier commun et ce boîtier commun est conçu de façon transportable.
